(19) Europäisches Patentamt
European Patent Office
Office européen des brevets

(11) **EP 2 633 644 B1**

(12) **EUROPEAN PATENT SPECIFICATION**

(45) Date of publication and mention
of the grant of the patent:
**25.10.2017 Bulletin 2017/43**

(51) Int Cl.:
***H04L 12/24*** *(2006.01)*

(21) Application number: **10801387.1**

(22) Date of filing: **17.11.2010**

(86) International application number:
**PCT/EP2010/067715**

(87) International publication number:
**WO 2012/055449 (03.05.2012 Gazette 2012/18)**

(54) **SERVICE PERFORMANCE IN COMMUNICATIONS NETWORK**

DIENSTLEISTUNGSFÄHIGKEIT IN EINEM KOMMUNIKATIONSNETZ

PERFORMANCES DE SERVICE DANS UN RÉSEAU DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010 US 408116 P**

(43) Date of publication of application:
**04.09.2013 Bulletin 2013/36**

(73) Proprietor: **Telefonaktiebolaget LM Ericsson
(publ)
164 83 Stockholm (SE)**

(72) Inventors:
• **FEDOR, Szymon**
**Athlone (IE)**
• **HANDURUKANDE, Sidath**
**Athlone (IE)**

(74) Representative: **Ericsson
Patent Development
Torshamnsgatan 21-23
164 80 Stockholm (SE)**

(56) References cited:
**US-A1- 2007 195 695**

• **IGOR PAIS ET AL: "End user behavior and
performance feedback for service analysis",
INTELLIGENCE IN NEXT GENERATION
NETWORKS, 2009. ICIN 2009. 13TH
INTERNATIONAL CONFERENCE ON, IEEE,
PISCATAWAY, NJ, USA, 26 October 2009
(2009-10-26), pages 1-6, XP031582836, ISBN:
978-1-4244-4693-3**
• **"User Service Performance", ERICSSON White
Paper, 1 February 2007 (2007-02-01), pages 1-17,
XP55005217, Retrieved from the Internet:
URL:http://skbs.files.wordpress.com/2007/0
9/user_service_performance.pdf [retrieved on
2011-08-18]**

**Description**

Technical Field

The present invention relates to performance of services delivered to users in communications networks, in general, and in particular to estimating end-user experience of service performance in communications networks.

Background

There are various types of services delivered to users using the telecom and ISP (Internet Service Provider) networks and with increase of bandwidth available to users more services are available (email, internet, voice over IP, IPTV) and the existing services move to higher quality levels (e.g. high quality video). Service impairment can happen due to various issues and problems within the network. From both user and operator/ISP perspective it is important to monitor service quality delivered to the end user so that any issues can be observed and rectified.

User Reported Quality of System Service (UR-QoSS) represents how user feels about the performance of a service she/he is using. This is a subjective measure and can vary from user to user. UR-QoSS is a component of Quality of Experience (QoE) which measures overall level of user's service satisfaction and besides service performance it expresses how the service is supported, paid for, set up etc. Generally, UR-QoSS consists of a number of measures for a given service (e.g., usability, video impairments for Internet Protocol television, IPTV). One of the examples of a UR-QoSS metric is Mean Opinion Score (MOS) which provides numerical indication of the perceived quality of received media after compression and transmission. However, it is not trivial to obtain UR-QoSS for every network and user equipment (UE) and software configuration without user's personal feedback. In other words, without some sort of human intervention it is difficult to obtain the UR-QoSS in a specific service set up. Since getting user feedback is not always possible and/or such user feedbacks are very limited other methods are used to estimate the user's UR-QoSS for a given service.

Key Performance Indicator (KPI) is a performance measure for a particular characteristic and is a measurable objective. KPIs are expressed as numerical values and generally these values are expressed as ranges, upper limits, lower limits or percentages.

System Service Key Performance Indicators (S-KPIs) are set of specific KPIs that represent characteristics for a specific system service such as IPTV as described in WO2008/121062A1. These KPIs are higher level KPIs that are directly characterizing the end-user service. Access time and total frame freezes during a time period are examples of S-KPIs for IPTV service. Generally, the application implementing particular service is capable of measuring S-KPI for a given service. The S-KPIs give accurate expression of the service quality only when they are measured as physically and logically close to the user as possible. For example, a codec used in IPTV application can measure S-KPIs related to frame freezes. Normally, various network level problems can cause S-KPIs variation. For example packet losses or jitter can cause frame freezes leading to variation of S-KPIs related to frame freezes.

Each S-KPI measures only one aspect of service performance. The overall service performance can be expressed using a so-called Quality of System Service (QoSS) metric which combines several (up to 10) S-KPIs of the same service. Therefore, QoSS metric is used when one single measure, reflecting a combination of at least two quality aspects is needed. Based on empirical tests operators can map QoSS to UR-QoSS. In other words, using empirical tests (carried out in a laboratory or in a network) operators can find threshold values of QoSS where users' UR-QoSS goes below accepted levels. It is not trivial to set such threshold values for QoSSs and setting such threshold values involves a lot of empirical tests. These tests are highly dependent on the service parameters, codecs, application parameters etc. As a result the validity of these thresholds are dependent on the application/codec settings etc. and need to be reevaluated upon changes in the settings.

Moreover, UR-QoSS depends on the user-specific parameters. The same value of QoSS may be assigned to a different UR-QoSS level if the users have different quality of service expectations. Even more, for the same user, his perception of UR-QoSS can vary with time. If, for example, he used a service of a good quality and started to experience an even better quality of service, he will not perceive the previous quality of the service as good anymore. Although S-KPIs can be measured in the application (e.g., using the codec module) it is not always feasible since no such functions are implemented in the application. In fact, it is very rare that such S-KPIs can be obtained from application implementing the service due to lack of that feature in the application. Even when such functions are implemented users might "switch off" these functionalities if that is possible and operators might not enable such functionalities due to additional network overheads incurred when using S-KPIs collections. As a result operators tend to use other methods to estimate the S-KPIs.

Resource Service KPIs (R-KPIs) are network level KPIs for example for a given network link. These include packet loss, jitter, and packet delay, amount of packet re-order etc. These KPIs are objective measures and are easy to estimate compared with UR-QoSS and S-KPIs.

There is known a document related to monitoring service performance, namely IGOR PAIS ET AL: "End user behavior and performance feedback for service analysis", INTELLIGENCE IN NEXT GENERATION NETWORKS, 2009. ICIN 2009. 13TH INTERNATIONAL CONFERENCE ON, IEEE, PISCATAWAY, NJ, USA, 26 October 2009 (2009-10-26), pages 1-6. However devices and operations as in the invention now to be described are neither disclosed nor suggested in this document.

The existing approaches to monitor service quality perceived by a user are based on one or combination of the following approaches:

1) Terminal reports. This approach is based on the assumption that operator is able to get terminal reports. In general this is not valid and reliable assumption since most UE devices are not capable of collecting or sending terminal reports.
2) Human centric - manual mapping of service quality (in terms of UR-QoSS) to R-KPIs values. Here designers, in design time, perform mapping of different R-KPIs values to expected service quality perceived by the user. In this approach, the manual mapping of R-KPIs to UR-QoSS is very time consuming, error prone and rigid. It is rigid in the sense it cannot adapt to changes in the system (i.e. network topology and technology changes) and new devices. As a result such methods are not viable in a dynamic real life network, in which topology, devices and their settings change.

Summary

It is the object of the present invention to obviate at least some of the above disadvantages and provide an improved method and apparatus for monitoring service performance in communications networks.

According to a first aspect of the present invention there is provided a method for monitoring performance of a service delivered to user equipment devices via a communications network as perceived by a user. The method comprises collecting Resource Service Key Performance Indicators, R-KPIs, from network resources and collecting System Service Key Performance Indicators, S-KPIs, from a representative sample of reporting user equipment devices using the service. In the next step the method comprises determining, for each user equipment device from the representative sample, a relationship between the collected values of R- KPIs and S-KPIs and then clustering the user equipment devices from the representative sample based on the relationships between the R-KPIs and S-KPIs. The following steps of the method comprise calculating, for every cluster, a generic relationship between R-KPIs and S-KPIs; assigning non-reporting user equipment devices to the clusters; collecting R-KPIs from network resources and then estimating S-KPIs values based on the generic relationship and the R-KPIs collected after the generic relationship is calculated.

According to a second aspect of the present invention there is provided a monitoring server for use in a communications network. The monitoring server is adapted to monitor performance of a service delivered to user equipment devices via the communications network. The monitoring server comprises a collecting module adapted to collect Resource Service Key Performance Indicators, R-KPIs, from network resources and System Service Key Performance Indicators, S-KPIs, from a representative sample of reporting user equipment devices using the service. The monitoring server also comprises a calculating module adapted to determine, for each user equipment device from the representative sample, a relationship between the collected values of R- KPIs and S-KPIs as well as a clustering module adapted to cluster the user equipment devices from the representative sample based one the relationships between the R-KPIs and S-KPIs. The calculating module is adapted to calculate, for every cluster, a generic relationship between R-KPIs and S-KPIs. The clustering module is also adapted to assign non-reporting user equipment devices to the clusters. The collecting module is adapted to collect R-KPIs after the relationship between the R- KPIs and S-KPIs is determined. The monitoring server is adapted to estimate S-KPIs values based on the generic relationship and the R-KPIs collected after the generic relationship is calculated.

According to a third aspect of the present invention there is provided a communications network for monitoring performance of a service delivered to user equipment devices via the communications network. The communications network comprises a plurality of network nodes and a monitoring server. The monitoring server comprises a collecting module adapted to collect Resource Service Key Performance Indicators, R-KPIs, from network resources and System Service Key Performance Indicators, S-KPIs, from a representative sample of reporting user equipment devices using the service. The monitoring server also comprises a calculating module adapted to determine, for each user equipment device from the representative sample, a relationship between the collected values of R- KPIs and S-KPIs and a clustering module adapted to cluster the user equipment devices from the representative sample based on the relationships between the R-KPIs and S-KPIs. The calculating module is adapted to calculate, for every cluster, a generic relationship between R-KPIs and S-KPIs. The clustering module is also adapted to assign non-reporting user equipment devices to the clusters. The collecting module is adapted to collect R-KPIs after the relationship between the R- KPIs and S-KPIs is determined. The monitoring server is adapted to estimate S-KPIs values based on the generic relationship and the R-KPIs collected after the generic relationship is determined.

Brief description of the drawings

The present invention will be understood and appreciated more fully from the following detailed description taken in conjunction with the drawings in which:

FIG. 1 is a diagram illustrating a communications network in one embodiment of the present invention;

FIG. 2 is a flowchart illustrating a method for estimating performance of a service in a communications network in one embodiment of the present invention;

FIG. 3 is a flowchart illustrating steps of calculating relationships between R-KPIs and S-KPIs in one embodiment of the method of the present invention;

FIG. 4 is a table for storing time-correlated S-KPIs and R-KPIs for individual service user in one embodiment of the method of the present invention;

FIG. 5 is a flowchart illustrating process of mapping between S-KPIs and UR-QoSS in one embodiment of the present invention;

FIG. 6 shows a table presenting how UE devices are assigned to clusters in one embodiment of the present invention;

FIG. 7 shows a decision tree used in assigning UE devices to clusters in one embodiment of the present invention;

FIG. 8 shows a table presenting user profile parameters for use by an algorithm for estimating UR-QoSS values in one embodiment of the present invention;

FIG. 9 shows a decision tree used in estimating QoSS class in one embodiment of the present invention;

FIG. 10 shows a monitoring server in one embodiment of the present invention;

FIG. 11 shows a monitoring server in one embodiment of the present invention.

Detailed description

This invention proposes a system and a method that allows an operator to semi-automatically estimate performance of a service perceived by the user in a situation where terminal reports are not available to the operator from all user equipment. A monitoring server collects measurements of resource services performance (R-KPIs) from bearers, links, nodes etc. It also collects parameters of system service performance (S-KPIs) from a representative sample of service users that have reporting capability. It then automatically calculates functional dependency of each S-KPI of several R-KPIs using Data Mining techniques. The system divides into clusters the representative sample of service users, which can send terminal reports, on the basis of functional relationship between resource service performance (measured by R-KPIs) and service performance parameters (S-KPIs). Then, for every cluster it calculates a generic relationship between R-KPIs and S-KPIs that is representative for the cluster members. It allows an operator to assign the terminals which cannot send terminal reports to a "closest" cluster and estimate S-KPIs values for this terminal using previously obtained function and R-KPIs measurements. As a result the operator can assess performance of services run on terminals which cannot or do not send service performance parameters.
Moreover, the system automatically updates mapping between individual service measures (i.e. S-KPIs) and overall service performance measure (i.e. QoSS) so that the calculated QoSS could be as close to the users' subjective measure of service quality (expressed by the so-called UR-QoSS classes) as possible. To do that the system collects user feedback about service performance (UR-QoSS) from a sample of service users. Usually service providers use a default static mapping between S-KPIs and QoSS which in reality can vary with time and users' expectations.

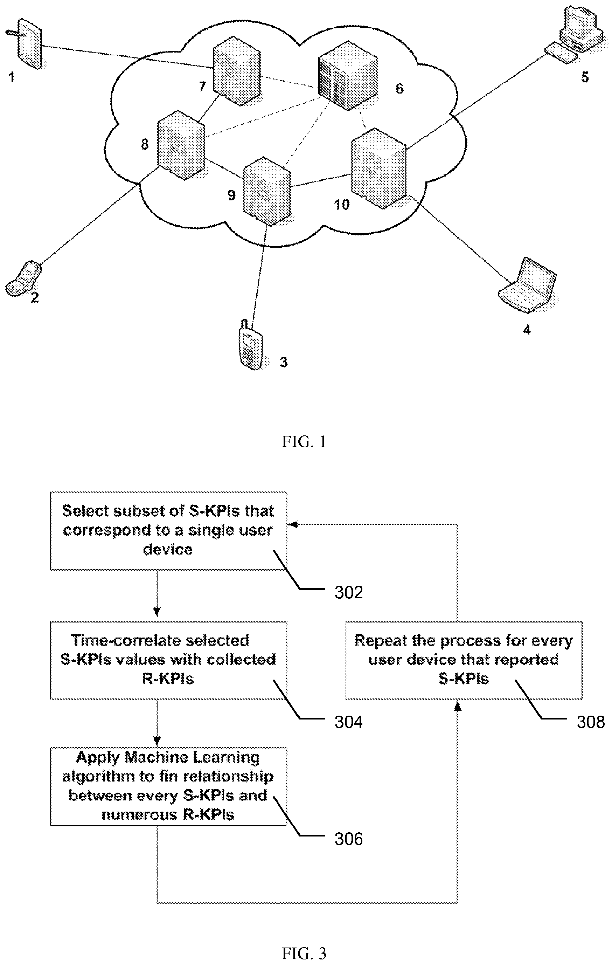

Fig. 1 illustrates a communication network having a set of elements that route signals between various connected UE devices (laptop 4; phone 2, 3; PC 5; PDA 1, etc.). The network elements 6 - 10 are connected together by communications links which include mobile links, satellite links, microwave links, fibre optics, copper wire etc. The network preferably includes a monitoring server, 6, that monitors the performance of the various communications links by measuring the Resource Service Key Performance Indicators (R-KPIs). In various embodiments the R-KPIs include link delay, link jitter, link packet loss, CPU load, buffer usage in routers, etc.
The method and monitoring server described below allow for semi-automatic determination of what are the network resources having impact on the performance of a service and, what makes it simple in operation, a network operator does not have to predefine network resources that are used by end user services. The method is generic, independent of network architecture and can be applied to various types of network (mobile, fixed, satellite, etc).

The connected UE devices are used by users to run services like IPTV, Mobile TV, VoIP (voice over Internet Protocol), MMTel (Multimedia Telephony Service), etc. A single aspect of performance of these services can be measured using the System Service Key Performance Indicators (S-KPIs). These can include service startup time, service accessibility, service quality etc. Generally, the most accurate measurement of S-KPIs can be performed on the connected devices and reported to a service performance monitoring server, e.g. OSS server or ACS (Access Control System) server, represented by the monitoring server 6 in Figure 1. However, as mentioned earlier, not always the S-KPIs can be collected from the user devices. Moreover, reporting of S-KPIs from every user device can increase the network traffic and load on the monitoring server.

The overall performance of a service can be measured using a Quality of System Service (QoSS) metric which combines several S-KPI measurements. QoSS level is calculated from S-KPIs and therefore does not necessarily represent user perception of service performance as the users may prioritize different aspects of service performance or may have different expectations from the same parameter of service performance. The service user is interested in a good quality of the service which can be expressed using a subjective metric - User Reported Quality of System Service (UR-QoSS) classes. An example of a UR-QoSS metric is Mean Score Opinion (MOS) which has 5 quality levels from Bad to Excellent. There is, however, a problem with obtaining UR-QoSS because not all users want to participate in reporting how they perceive the quality of the received service.

There exist methods of estimation of MOS on the basis of network performance and they are based on static functional expressions obtained in laboratory measurements. However, the functional expression is user dependent and can vary with time. The proposed invention describes a method of semi-automatically estimating UR-QoSS values for each service user on the basis of S-KPIs, R-KPIs and individual user's profiles (expressed by a combination of parameters like age, occupation, service usage etc.).

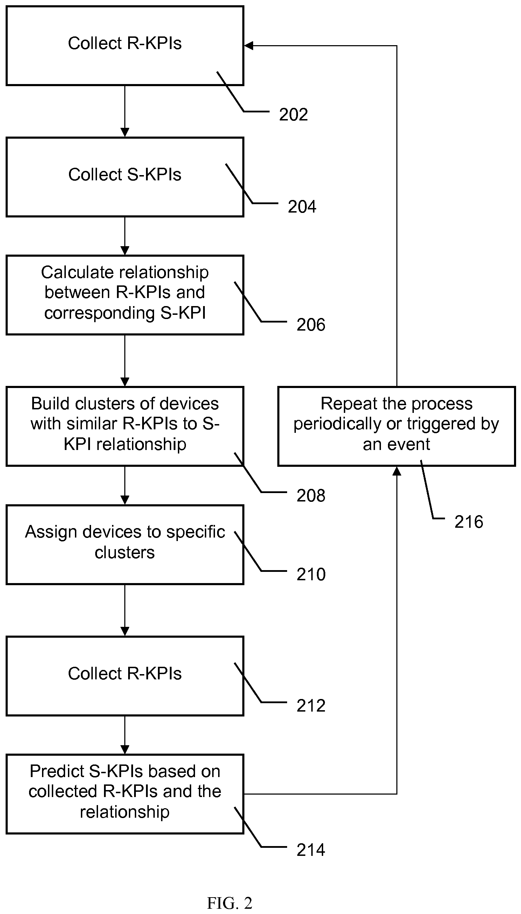

Change in a system service quality is caused by a variation of the performance of network elements and links that are used by the service. Therefore, monitoring of a system service quality can be performed by measuring and processing R-KPIs at the monitoring server. The server executes steps of an embodiment of the method of the present invention as illustrated in Fig. 2 in order to achieve this goal. In the first step of the method R-KPIs are measured in various nodes, 7 - 10, of the network 100 and collected, 202, by the monitoring server. At the same time S-KPIs are collected, 204, from a representative subset of users, although performing these two operations simultaneously is not essential. In alternative embodiments one may be performed after another or with some overlap. In the following step a mathematical relationship between R-KPIs and S-KPIs is calculated, 206. When the representative subset of users of a service is large enough the method comprises a step of building clusters 208 of UE devices with similar R-KPI to S-KPIs relationship. In the following step the method comprises assigning the remaining devices (the ones not in the representative subset of users that were able to report S-KPIs) to their closest clusters 210. The method also comprises monitoring system service performance by collecting and processing R-KPI values, 212 to estimate S-KPI values 214. The second step of collecting and processing R-KPI values, 212, is for continuous estimating of S-KPI values. In turn, the first step of collecting of R-KPI values, 202, together with collecting S-KPI values, 204, is for training purposes, i.e. to enable the monitoring server 6 determining the relationship between R-KPIs and S-KPI. Once the relationship between R-KPIs and S-KPI is known (determined in step 206) it is enough to collect R-KPIs (step 212) in order to estimate S-KPIs (step 214).

**Collecting R-KPIs**

To learn automatically about the impact of the R-KPIs on the value of S-KPIs, the monitoring server 6 has to collect values of R-KPIs and S-KPIs correlated in time. The monitoring server 6 monitors the network resources and corresponding R-KPIs (for example packet loss, link delay, jitter etc) measured at network elements 7 - 10. These parameters can be measured and reported by network elements located at the end of network links (switches, routers, GGSN, etc.) periodically, where GGSN refers to a Gateway General Packet Radio Service Support Node. In another embodiment of this invention R-KPIs can be received from a central server which already collected these values (e.g. OSS or ACS). Periodicity of these reports is defined by the monitoring server 6 so that the monitoring process does not overload network equipment but also allows close time correlation of R-KPI and S-KPI reports.

**Collecting S-KPIs**

S-KPI values are collected independently for end-user service provided in a network. For every service numerous S-KPIs are monitored. They are assigned to one of three categories: service accessibility (e.g. IPTV session accessibility), service retainability (e.g. IPTV session retainability) and service integrity (e.g. IPTV media quality). The monitoring server 6 collects corresponding S-KPIs (included in so-called Terminal Reports) from a sample set of all users of the service who are able to send terminal reports. This is because S-KPIs not always can be reported by an UE device because the UE device may not be equipped to provide such reports or the user may decide not to provide such reports. Sending such reports requires user's interaction and time and the user may decide not to participate even if his/her terminal is equipped to provide terminal reports. Terminal Reporting is not always available or not enabled on a device. The UE devices from which the S-KPIs values are collected should be representative for all of the service users. Therefore they should be distributed across various factors that may affect performance of the service as perceived by an individual user, e.g. geographically, according to the device capabilities, according to the type of end user connection, according to the part of the network used.

There is a minimum number of UE devices that need to send Terminal Reports in order to build a representative model of the monitored service. This minimum number can be established with the theory of statistics. The minimum sample size is a function of confidence interval and a total number of service users. The confidence interval represents the likelihood that the population is well represented by a selected sample. For example if the confidence interval equals 95% it means that 95% of the service users would have similar experience of service performance as the users from the selected sample. Obviously we will never have 100% confidence unless we consider the whole population. Usually we set confidence interval to 95% or 99%. Also, the size of the representative sample increases with the number of service users. There are well established statistical methods to calculate the size of a representative sample as a function of the confidence interval and population size. The relationship between the representative sample size and population size is not linear and above a certain threshold of the population size, the size of the representative sample is almost static. For a population above 100000 the representative size is about 1800. With that in mind the method according to embodiments of the present invention is fully executed when the collected S-KPIs are collected from a representative subset of users. This can be controlled by adjusting the confidence interval, which has influence on accuracy of the method.

Preferably, the collected R-KPIs and S-KPIs are stored in a local database 1012 by the monitoring server 6. They are then used to establish a mathematical dependency of individual S-KPI from numerous R-KPIs.

## Calculating Mathematical Relationships Between R-KPIs And S-KPIs

The monitored services use network resources and therefore the performance of network resources (measured as R-KPIs values) is reverberated in the values of S-KPIs. The values of R-KPIs and S-KPIs are cross-correlated and the monitoring server 6 uses automatic methods based on machine learning and data mining algorithms to establish the cross-correlation. The method to calculate this function is illustrated in Fig. 3.

Fig. 3 illustrates one embodiment of a process that is performed for every UE device that reported S-KPIs. First, the subset of S-KPIs that were reported by a single UE device is selected 302. These parameters correspond to numerous services run on the UE device.

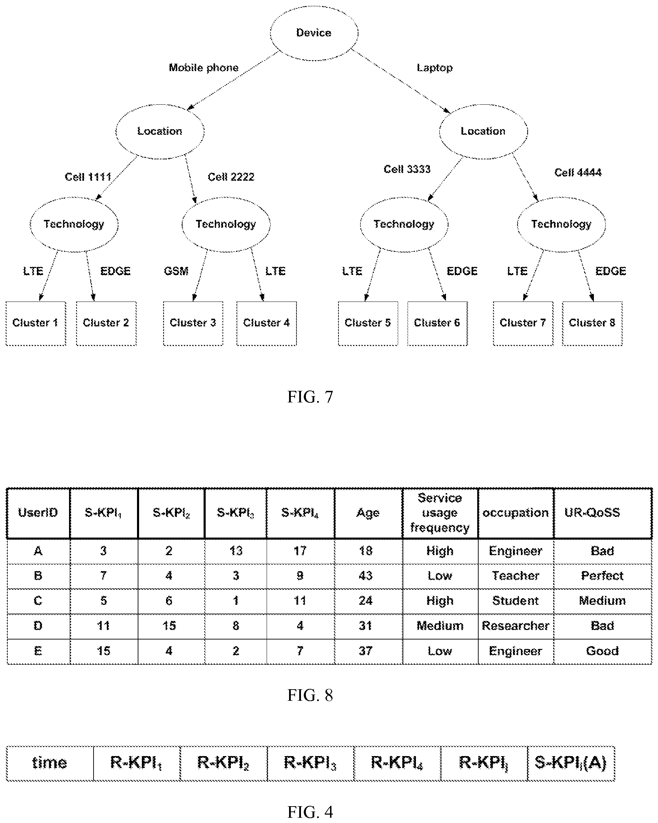

Next, the values of S-KPIs and R-KPIs are time-correlated for each service user independently 304. Therefore, they can be stored in a table as shown in Fig. 4. The time parameter corresponds to an approximate timestamp of collecting R-KPIs and S-KPI. There are several measured R-KPI values ($R\text{-}KPI_1$ - $R\text{-}KPI_i$) that affect the reported $S\text{-}KPI_i(A)$ value. The maximal time approximation is defined in a monitoring server 6 and should be of such an order that cross correlation between R-KPIs and S-KPI could be easily observable.

$R\text{-}KPI_i$ values ($R\text{-}KPI_1$ - $R\text{-}KPI_i$) are all network related parameters. $S\text{-}KPI_i(A)$ value represents specific aspect "i" of performance of a service used by a single user A. There are several S-KPIs corresponding to the same service and each of them is represented with unique index "i" for the same user.

Then for every S-KPI the mathematical function is automatically established using Machine Learning and Data Mining methods 306. The function has a format

$$S\text{-}KPI_i\,(A) = f\,(R\text{-}KPI_1,\ R\text{-}KPI_2,\ R\text{-}KPI_3,\ ...) \qquad (1)$$

The possible methods to obtain this formula are linear regression, polynomial fitting, support vector regression, etc. These methods are well known in the art and will not be discussed here in great detail. The used method for obtaining the formula extracts only the R-KPIs that have impact on the value of considered S-KPI, i.e. S-KPI and used R-KPIs are not independent variables. As a result the system will automatically detect what are the network resources used by a service because their R-KPI parameters will be present in the formula calculating this service S-KPI. In other words, the function (1) defining $S\text{-}KPI_1\,(A)$ depends on one set of R-KPI values (e.g. $R\text{-}KPI_1$, $R\text{-}KPI_2$, $R\text{-}KPI_4$ and $R\text{-}KPI_6$) and $S\text{-}KPI_2\,(A)$ depends on another set of R-KPI values (e.g. $R\text{-}KPI_I$, $R\text{-}KPI_3$, $R\text{-}KPI_5$ and $R\text{-}KPI_7$). Because $R\text{-}KPI_3$ does not affect $S\text{-}KPI_1\,(A)$ it is not used by the function $f$ defining $S\text{-}KPI_1\,(A)$. The steps 302 - 306 are repeated, 308, for every user equipment that reported S-KPIs. The obtained function is stored in the local database 1012 for further analysis. In one embodiment the database 1012 is part of the monitoring server 6 and in an alternative embodiment the database is a separate device to which the monitoring server 6 has access.

### Building Clusters

At this stage the system is able to estimate S-KPI values from R-KPIs using the *f* function defined in equation 1. The estimated S-KPI values are for services used by the non-reporting UE devices. The obtained functions *f* are used to group the reporting UE devices into clusters. This is because the same network resources can be shared by several users of the same service and therefore their corresponding *f* functions will be similar. For example, two users (A and B) of a Mobile TV service belonging to the same mobile network cell can be using network resources of similar performance while using the service. Hence, previously estimated functions to obtain $S\text{-}KPI_i(A)$ and $S\text{-}KPI_i(B)$ for the Mobile TV service will be similar.

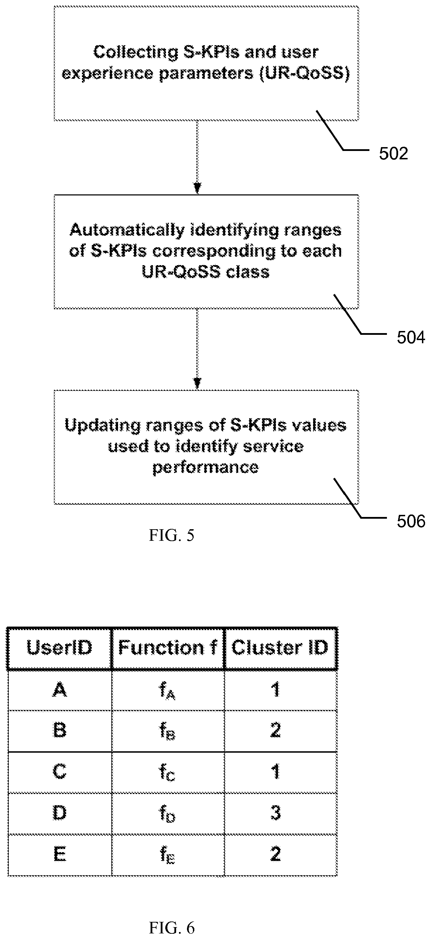

Clusters can be determined automatically using known Data Mining techniques, e.g. K-means, Agglomerative Hierarchical Clustering, DBSCAN, and others. Each $S\text{-}KPI_i$ will have a different cluster structure because every $S\text{-}KPI_i$ has an associated function *f*. For every $S\text{-}KPI_i$ parameter the clustering algorithm (one of the mentioned above, e.g. DBSCAN) is provided with function *f* specific to a user and the clustering algorithm outputs clusters of users that have similar values of their *f* function. So the users of the service are grouped into clusters as shown in Fig. 6. In this example, user A is assigned to cluster 1 because his function $f_A$ used to calculate $S\text{-}KPI_1$ from the values of R-KPIs has similar value (i.e. separated by no more than X, which is a maximum predefined parameter) to other users' functions from cluster 1 for the same input aguments i.e. function $f_C$ of the user C. Users B and E are assigned to cluster 2 because their functions $f_B$ and $f_C$ give similar results according to the determination performed by the clustering algorithm.

As members of the same cluster have similar values of function *f* used to calculate S-KPI from R-KPIs, the system will assign a representative function g, unique for each cluster, which is a generalization of all functions *f* from the same cluster. This function g is used to calculate $S\text{-}KPI_i$ parameter for the users belonging to the same cluster as described below. Function g reflects the values of functions $f_i$ from the same cluster. One of the possibilities would be to take the mean of all functions $f_i$.

$$g(\text{N-KPI}_1, \text{N-KPI}_2, \ldots \text{N-KPI}_N ) = \Sigma_{i=1toZ}[f_i(\text{N-KPI}_1, \text{N-KPI}_2, \ldots \text{N-KPI}_N)]/Z \quad (2)$$

In alternative embodiments a median value is taken instead of the mean.

### Assigning Devices To Clusters

So far the embodiments of the method of the invention considered only the sample of service users whose UE devices were able to report S-KPI parameters (because the initial clustering, 208, is performed on the UE devices that reported S-KPIs). In embodiments of the method of the invention performance of system services used by the remaining users is estimated by assigning the remaining users individually to a closest cluster. The closest cluster, in one embodiment, is determined on the basis of several parameters, e.g. geographical proximity, network topology proximity, end-user device performance, audio codec used etc. These are the parameters which have impact on the expression (and values) of previously obtained functions *f* and therefore users from the same cluster will have a similar range of these parameters.

The assignment of the remaining users to a closest cluster can be performed with a data mining technique like decision tree, Bayesian Network, Support Vector Machine, etc. An example of a decision tree is shown in Fig. 7. This tree is built automatically for each $S\text{-}KPI_i$ parameter. In this example a user with a mobile phone, located in Cell 1111 and using LTE technology belongs to cluster 1. In turn, a user with a laptop in cell 3333 operating in EDGE technology belongs to cluster 6. In this way each UE device can be checked against various criteria and at the end of the process be assigned, 210, to a cluster of UE devices that also meet the same criteria.

Once the UE device is assigned, 210, to a cluster, its $S\text{-}KPI_i$ can be monitored using the function g of that cluster. Preferably, a UE device belongs to many clusters, each of these clusters allowing for monitoring a single aspect ($S\text{-}KPI_i$) of the overall service performance.

### Monitoring Service Performance Using R-KPI Values

Previously described techniques allow monitoring of $S\text{-}KPI_i$ parameters that contribute to overall performance of a service as perceived by a user, but the service users' perception of the overall service performance (i.e. UR-QoSS) is still not known. The section below describes how an operator can estimate users' opinion about overall service

performance.

S-KPI$_i$ parameters of the same service are combined/aggregated to express a Quality of System Service (QoSS) which represents overall service performance. The user perception of service performance can vary among service users for the same values of S-KPI$_i$ parameters. Indeed, users can have different expectations about service performance and may prioritize different aspects of the QoSS. Their expectations may depend on users' age, occupation, exposure to technology, frequency of service usage, etc. Therefore expression of QoSS should be adapted to a service user profile in order to represent closely user's perception of service performance. Such user's perception of service performance is expressed by User Reported Quality of System Service, UR-QoSS.

The adaptation of the QoSS expression to be closely related to the UR-QoSS is performed using data mining techniques as shown in Fig. 5. The service performance monitoring server 6 collects UR-QoSS values from a sample of UE devices in addition to monitoring of S-KPI$_i$ parameters, 502, reported by the representative subset of users as previously described. For example, a user can press a button on a remote controller, wherein the button activates a function of reporting the user's perception of service performance, when he wants to report specific performance of IPTV service. Also a VoIP user can report the quality of a call using a customized application.

It is expected that user's judgment of the service performance (measured with UR-QoSS classes) is a combination of different aspects of service performance (expressed by S-KPI$_i$ parameters) and user profile. Therefore, the monitoring server 6 initially uses a default mapping between S-KPI$_i$ parameters and QoSS metric obtained in laboratory tests. In effect, each UR-QoSS class have an associated range of S-KPIs 504 and this is used in the process of mapping. However, when the service is used the system can automatically learn how to combine S-KPI$_i$ parameters into QoSS so that the latter can reflect user's judgment of service performance (UR-QoSS) and the ranges of S-KPIs values are updated accordingly 506. This learning can be performed with data mining techniques like Hunt's algorithm, Support Vector Machine, Neural Networks, etc.

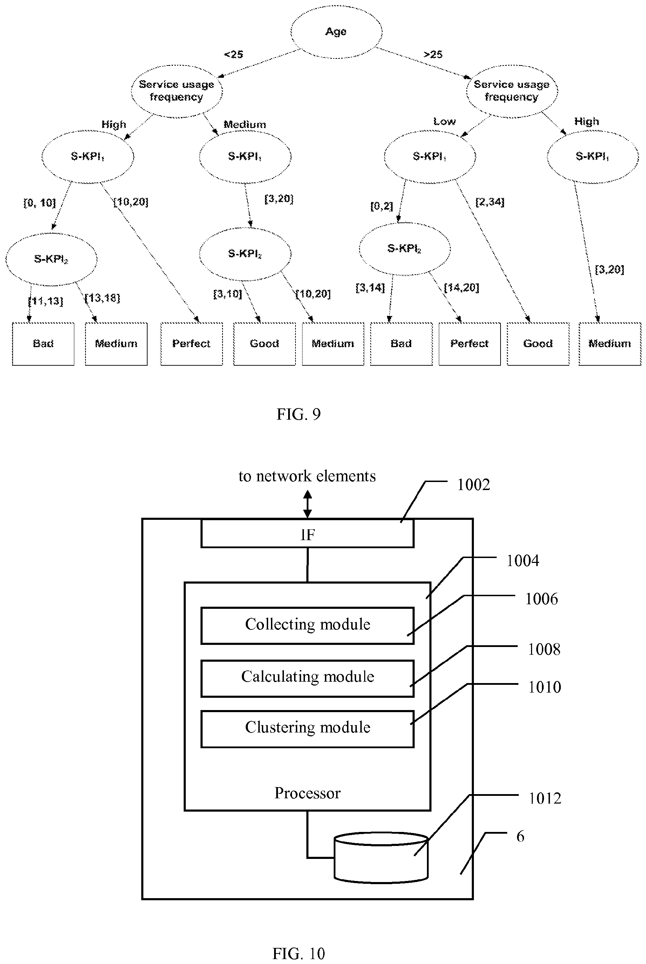

The learning algorithm is provided with time correlated S-KPI$_i$ parameters and UR-QoSS values reported by a user (as previously described). Also user profile parameters are available to the algorithm as shown in Fig. 8. Depending on the algorithm used, it will output a decision tree, Bayesian Network, Rules, Support Vectors, to estimate QoSS in function of user profile and S-KPIi parameters. Figure 9 shows an example of a decision tree.

The output of the learning algorithm allows the system to calculate QoSS of any service user so that it could be close to user's judgment of service performance (i.e. UR-QoSS). The estimation of the QoSS class will be based on S-KPI$_i$ parameters and user profile. For example according to the tree from Fig. 9, if a user is less than 25 years old, his/her frequency of using the service is high and the S-KPI$_1$ and S-KPI$_2$ of this service have values 3 and 15 respectively, the system will estimate the value of QoSS as "Medium".

The procedure to estimate user judgment of service performance includes a step in which the monitoring server continues to collect R-KPI values, step 212 in Fig. 2. Having collected R-KPI values, for every UE device (A) and service running on it, the monitoring server 6 can estimate 214 the values of corresponding S-KPI$_i$(A). For every S-KPI$_i$(A) parameter it uses function g (described in section Building Clusters) representative for the given cluster. Input variables of this function are the current values of the collected R-KPIs.

Overall performance of the service is determined by the combination of S-KPI$_i$ parameters relevant to the service - i.e. QoSS. The service provider can identify the class of QoSS according to the range of the S-KPI$_i$ values and user profile. Initially the service provider assigns default ranges of S-KPI$_i$ corresponding to different classes of service performance (QoSS classes). There could be several QoSS classes (good, medium, bad, etc.). The ranges of S-KPI$_i$ assigned to QoSS classes can be automatically updated by the monitoring server 6 as described in this section.

As described above it is clear that the present invention allows for monitoring service performance on end-user devices that are not able to send terminal reports with service performance parameters and additionally reduces traffic load in comparison to the service monitoring methods which are heavily dependant on terminal reports.

**Automatic Update Of Service Performance Monitoring**

In a preferred embodiment the described procedure of monitoring overall service performance is updated during the availability of the service. There are several benefits of doing it. First, the structure of clusters which are used to calculate S-KPI$_i$ values from R-KPI values change with time because service users from the representative sample can change locations, terminal equipment, audio codec used etc. Also, users which do not send terminal reports may change parameters which are used to assign them to a specific cluster for calculation of S-KPI$_i$ values.

Second, the structure of the clusters used to estimate QoSS varies with time because users of a specific user profile can change expectations of the service quality. Also users can modify their behaviours of service usage and therefore can move from one user profile to another.

Therefore, previously identified relationship between S-KPIs and R-KPIs is updated after a certain period of time. This period is defined in the monitoring server 6 and in one embodiment it can be even equal to zero. Then the monitoring server 6 monitors permanently the S-KPIs values from a subset of all service users and updates the relationship

between every S-KPI$_i$ and R-KPIs. When the period is not equal to zero, the server restarts monitoring of S-KPI$_i$ and R-KPIs and updates the relationship between them after certain period of time as shown in Fig 2 in step 216.

The reassessment of the relationship between S-KPI$_i$ and R-KPIs can also be triggered by an event, e.g. network topology change, significant increase of service users or discrepancy between estimated QoSS and reported by the user UR-QoSS values. When the system discovers inconsistency between QoSS and UR-QoSS values, the aggregation method used to obtain QoSS from S-KPI$_i$ parameters (described in section Monitoring Service Performance Using R-KPI Values) must be reassessed. The benefit of the reassessment is that it automatically adapts the mapping between service performance parameters and user perception of service performance as the circumstances change.

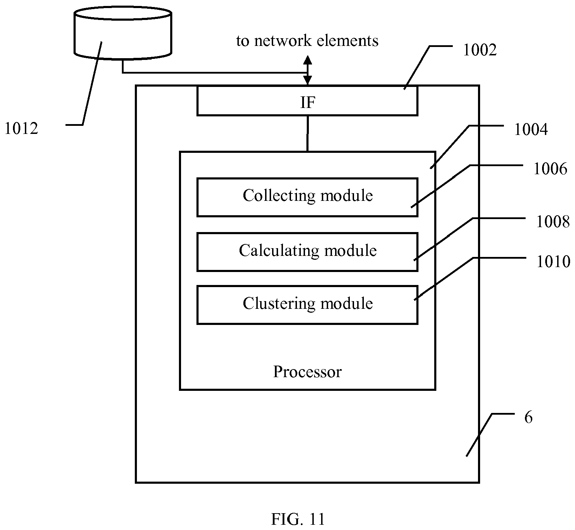

The monitoring server is illustrated in Fig. 10 and Fig. 11. The monitoring server 6 comprises a collecting module 1006 adapted to collect Resource Service Key Performance Indicators (R-KPIs) from network resources (bearers, links, nodes, etc.) and System Service Key Performance Indicators (S-KPIs) from a representative sample of reporting user equipment using the service. The monitoring server further comprises a calculating module 1008 adapted to calculate relationship between the collected values of R- KPIs and S-KPIs and a clustering module 1010. The clustering module clusters user equipment from the representative sample based on relationship between the R-KPIs and S-KPIs. Additionally the clustering module 1010 assigns the non-reporting user equipment to the clusters. The collecting module 1006 is adapted to collect R-KPIs after the relationship between the R- KPIs and S-KPIs have been calculated. The monitoring server 6 then estimates S-KPIs values based on the collected R-KPIs and the relationship. Before the relationship is calculated the monitoring server collects test (or training) data R-KPIs (step 202) from network resources (e.g. bearers, links and nodes) and S-KPIs (step 204) from the reporting user equipment. After the relationship between R-KPIs and S-KPIs is known the monitoring server is "trained" and only needs to collect R-KPIs (step 212) to estimate S-KPIs (step 214). So although in both steps the system collects N-KPIs, they are used differently.

In a preferred embodiment the collecting module 1006, calculating module 1008 and clustering module 1010 are implemented in software operating in processor 1004. Alternatively, the modules 1006 - 1010 may be implemented as hardware modules. The monitoring server 6 is connected to the communications network via interface 1002.

## Example

To illustrate how the proposed invention could be used the following example of a system monitoring IPTV service is described. An operator collects measurements of network performance (R-KPIs) from nodes of the network. These R-KPIs could be packet loss or packet delay of the links. These quantities can be measured by the probes deployed in the network or by the nodes like switches or routers. The operator also selects a subset of IPTV service users that send terminal reports with IPTV service performance measurements (S-KPIs). S-KPIs specific to IPTV are choppiness or frame freeze. Then, for every user reporting S-KPIs, relationship between R-KPIs and S-KPIs is determined, as described in section Calculating Mathematical Relationships Between R-KPIs And S-KPIs.

Next, in order to estimate S-KPIs of the users who did not report S-KPIs, the monitoring server 6 clusters the previously calculated relationships which have similar values of their functions $f$. For example, functions $f$ which use the same N-KPIs as arguments (because the service is delivered over the same links) with different but relatively close multiplication coefficients will belong to the same cluster. As a result, users which have an S-KPI calculated with a similar function will be assigned to the same cluster. Then the remaining users are assigned, 210, to the closest cluster. This assignment can be performed for example on the basis of the geographical location or type of the network used (3G, ADSL).

Then, the operator relies on monitoring R-KPIs in order to estimate S-KPIs for every user. The operator collects R-KPI values from network elements, calculate IPTV S-KPIs and depending of the result, estimate level of the service quality (QoSS). Mapping between S-KPIs values and QoSS is static.

However, if the communications network and the provided service give the user a possibility to report his perception of service quality level the monitoring server 6 also receives UR-QoSS reports from users of the service. After receiving UR-QoSS reports from service users, the monitoring server 6 updates the mapping between S-KPIs and QoSS automatically so that the latter corresponds to the UR-QoSS reported by the users. Therefore, if the mapping method is updated, the operator monitors service quality with the newly obtained function and is able to estimate user's perception of the service performance even for the non reporting UE devices. In contrast to the static methods of estimating MOS/UR-QoSS, in the proposed system, dynamic changes of network characteristics and service user properties are easier to handle. MOS/UR-QoSS values are fed to the monitoring server using user feedbacks (e.g. from a set top box's remote control). These feedbacks are used as a small set of sample MOS/UR-QoSS feedbacks from users of the service. Then, based on S-KPIs received from the codec from the same set top boxes, a mapping between MOS/UR-QoSS and QoSS (which is an aggregation of S-KPIs) is built. After this step, the mapping between S-KPIs and R-KPIs can also be built such that R-KPIs can be used to estimate MOS/QoSS.

**Claims**

1. A method for monitoring performance of a service delivered to user equipment devices via a communications network as perceived by a user; the method comprising:

   - collecting Resource Service Key Performance Indicators (202), R-KPIs, from network resources;
   - collecting System Service Key Performance Indicators, S-KPIs (204), from a representative sample of reporting user equipment devices using the service;
   - determining (206), for each user equipment device from the representative sample, a relationship between the collected values of R- KPIs and S-KPIs;
   - clustering (208) the user equipment devices from the representative sample based on the relationships between the R-KPIs and S-KPIs;
   - calculating, for every cluster, a generic relationship between R-KPIs and S-KPIs
   - assigning (210) non-reporting user equipment devices to the clusters;
   - collecting (212) R-KPIs from network resources; and
   - estimating (214) S-KPIs values based on the generic relationship and the R-KPIs collected after the generic relationship is calculated.

2. The method according to claim 1 comprising repeating (216) the steps periodically or triggered by an event.

3. The method according to any one of preceding claims, wherein the step of determining the relationship comprises:

   - selecting (302) a subset of S-KPIs reported by a single user equipment device;
   - time-correlating (304) the values of S-KPIs reported by the single user equipment device and the R-KPIs;
   - for every S-KPI reported by the single user equipment device determining (306) a function defining the relationship using Machine Learning and/or Data Mining methods.

4. The method according to claim 3 further comprising repeating (308) the steps of determining the relationship for every user equipment device that reported S-KPIs.

5. The method according to any one of preceding claims comprising mapping the estimated S-KPI values onto Quality of System Service, QoSS, classes to correlate the QoSS classes with the users' perception of the service performance reported in User Reported-QoSS.

6. The method according to claim 5, wherein the QoSS classes used in the mapping are determined on the basis of User Reported-QoSS received from at least part of the users of the service.

7. The method according to any one of claims 1 - 6, wherein in the step of clustering (208) a user equipment device from the representative sample is assigned (210) to a cluster if a function defining the relationship between R-KPIs and S-KPIs for this user equipment device is within a range defined for this cluster.

8. The method according to any one of claims 1 - 7, wherein the non reporting user equipment devices are assigned to clusters based on geographical proximity or network topology proximity, or performance of a user equipment device, codec used or any combination of these.

9. A monitoring server (6) for use in a communications network for monitoring performance of a service delivered to user equipment devices via the communications network, the monitoring server (6) comprising a collecting module (1006) adapted to collect Resource Service Key Performance Indicators, R-KPIs, from network resources and System Service Key Performance Indicators, S-KPIs, from a representative sample of reporting user equipment devices using the service; a calculating module (1008) adapted to determine, for each user equipment device from the representative sample, a relationship between the collected values of R- KPIs and S-KPIs; a clustering module (1010) adapted to cluster the user equipment devices from the representative sample based on the relationships between the R-KPIs and S-KPIs, wherein the calculating module (1008) is adapted to calculate, for every cluster, a generic relationship between R-KPIs and S-KPIs and the clustering module (1010) is adapted to assign non-reporting user equipment devices to the clusters, wherein the collecting module (1006) is adapted to collect R-KPIs after the relationship between the R- KPIs and S-KPIs is determined and the monitoring server (6) is adapted to estimate S-KPIs values based on the generic relationship and the R-KPIs collected after the generic relationship is calculated.

**10.** The monitoring server (6) according to claim 9, the monitoring server further comprising a processor, wherein the calculating module (1008) is implemented in the processor and wherein in the step of determining the relationship the calculating module (1008) is adapted to select (302) a subset of S-KPIs reported by a single user equipment device and time-correlate (304) the values of S-KPIs reported by the single user equipment device and the R-KPIs; wherein for every S-KPI reported by the single user equipment device the calculating module (1008) is adapted to define the relationship using Machine Learning and/or Data Mining methods.

**11.** The monitoring server (6) according to claim 10 wherein the processor is adapted to determine the relationship for every user equipment device that reported S-KPIs.

**12.** The monitoring server (6) according to any one of claims 9 - 11 wherein the processor is adapted to map the estimated S-KPI values onto Quality of System Service, QoSS, classes to correlate the QoSS classes with the users' perception of the service performance reported in User Reported-QoSS.

**13.** The monitoring server (6) according to claim 12, wherein the QoSS classes used in the mapping are determined on the basis of User Reported-QoSS received from at least part of the users of the service.

**14.** The monitoring server (6) according to any one of claims 9 - 11, wherein the clustering module (1010) is adapted to assign a user equipment device from the representative sample to a cluster if a function defining the relationship between R-KPIs and S-KPIs for this user equipment device is within a range defined for this cluster.

**15.** A communications network for monitoring performance of a service delivered to user equipment devices via the communications network, the communications network comprising a plurality of network nodes (7 - 10) and a monitoring server (6); the monitoring server comprising a collecting module (1006) adapted to collect Resource Service Key Performance Indicators, R-KPIs, from network resources and System Service Key Performance Indicators, S-KPIs, from a representative sample of reporting user equipment devices using the service; a calculating module (1008) adapted to determine, for each user equipment device from the representative sample, a relationship between the collected values of R- KPIs and S-KPIs; a clustering module (1010) adapted to cluster the user equipment devices from the representative sample based on the relationships between the R-KPIs and S-KPIs, wherein the calculating module (1008) is adapted to calculate, for every cluster, a generic relationship between R-KPIs and S-KPIs and the clustering module (1010) is adapted to assign non-reporting user equipment devices to the clusters, wherein the collecting module (1006) is adapted to collect R-KPIs after the relationship between the R- KPIs and S-KPIs is determined and the monitoring server (6) is adapted to estimate S-KPIs values based on the generic relationship and the R-KPIs collected after the generic relationship is calculated.

**Patentansprüche**

**1.** Verfahren zur Überwachung von Leistung eines Dienstes, der über ein Kommunikationsnetzwerk an Benutzereinrichtungen zugestellt wird, wie von einem Benutzer wahrgenommen, wobei das Verfahren umfasst:

- Sammeln von Ressourcendienst-Leistungskennzahlen (202), R-KPIs, von Netzwerkressourcen;
- Sammeln von Systemdienst-Leistungskennzahlen, S-KPIs (204), aus einer repräsentativen Stichprobe von meldenden Benutzereinrichtungen, die den Dienst verwenden;
- Bestimmen (206) für jede Benutzereinrichtung aus der repräsentativen Stichprobe einer Beziehung zwischen den gesammelten Werten von R-KPIs und S-KPIs;
- Clustern (208) der Benutzereinrichtungen aus der repräsentativen Stichprobe basierend auf den Beziehungen zwischen den gesammelten Werten von R-KPIs und S-KPIs;
- Berechnen für jeden Cluster einer generischen Beziehung zwischen R-KPIs und S-KPIs;
- Zuweisen (210) nichtmeldender Benutzereinrichtungen zu den Clustern;
- Sammeln (212) von R-KPIs von Netzwerkressourcen; und
- Schätzen (214) von S-KPI-Werten basierend auf der generischen Beziehung und den gesammelten R-KPIs nach dem Berechnen der generischen Beziehung.

**2.** Verfahren nach Anspruch 1, umfassend ein periodisches oder durch ein Ereignis ausgelöstes Wiederholen (216) der Schritte.

**3.** Verfahren nach einem der vorhergehenden Ansprüche, wobei der Schritt des Bestimmens der Beziehung umfasst:

EP 2 633 644 B1

- Auswählen (302) eines Teilsatzes von S-KPIs, die durch eine einzelne Benutzereinrichtung gemeldet werden;
- zeitliches Korrelieren (304) der Werte von S-KPIs, die von der einzelnen Benutzereinrichtung gemeldet werden, und der R-KPIs;
- Bestimmen (306) für jede von der einzelnen Benutzereinrichtung gemeldete S-KPI einer Funktion, welche die Beziehung unter Verwendung von Verfahren für maschinelles Lernen und/oder Datenauswertung definiert.

4. Verfahren nach Anspruch 3, ferner umfassend ein Wiederholen (308) der Schritte des Bestimmens der Beziehung für jede Benutzereinrichtung, die S-KPIs meldet.

5. Verfahren nach einem der vorhergehenden Ansprüche, umfassend ein Zuordnen der geschätzten S-KPI-Werte zu Systemdienstgüte, QoSS,-Klassen, um die QoSS-Klassen mit der Wahrnehmung von Benutzern der in QoSS-Meldungen von Benutzern gemeldeten Dienstleistung zu korrelieren.

6. Verfahren nach Anspruch 5, wobei die QoSS-Klassen, die beim Zuordnen verwendet werden, auf der Basis von QoSS-Meldungen von Benutzern bestimmt werden, die von wenigstens einem Teil der Benutzer des Dienstes empfangen werden.

7. Verfahren nach einem der Ansprüche 1 bis 6, wobei im Schritt des Clusterns (208) eine Benutzereinrichtung aus der repräsentativen Stichprobe einem Cluster zugewiesen wird (210), wenn eine Funktion, welche die Beziehung zwischen R-KPIs und S-KPIs für diese Benutzereinrichtung definiert, innerhalb eines für diesen Cluster definierten Bereichs liegt.

8. Verfahren nach einem der Schritte 1 bis 7, wobei die nichtmeldenden Benutzereinrichtungen Clustern basierend auf einer geografischen Lage oder Netzwerktopologie-Lage oder Leistung einer Benutzereinrichtung oder einem verwendeten Codec oder einer beliebigen Kombination derselben zugewiesen werden.

9. Überwachungsserver (6) zur Verwendung in einem Kommunikationsnetzwerk zum Überwachen von Leistung eines Dienstes, der über das Kommunikationsnetzwerk an Benutzereinrichtungen zugestellt wird, wobei der Überwachungsserver (6) umfasst:

ein Sammelmodul (1006), das zum Sammeln von Ressourcendienst-Leistungskennzahlen, R-KPIs, von Netzwerkressourcen und Systemdienst-Leistungskennzahlen, S-KPIs, aus einer repräsentativen Stichprobe von meldenden Benutzereinrichtungen, die den Dienst verwenden, ausgelegt ist; ein Berechnungsmodul (1008), das zum Bestimmen einer Beziehung zwischen den gesammelten Werten von R-KPIs und S-KPIs für jede Benutzereinrichtung aus der repräsentativen Stichprobe ausgelegt ist; ein Clustermodul (1010), das zum Clustern der Benutzereinrichtungen aus der repräsentativen Stichprobe basierend auf den Beziehungen zwischen den gesammelten Werten von R-KPIs und S-KPIs ausgelegt ist, wobei das Berechnungsmodul (1008) zum Berechnen einer generischen Beziehung zwischen R-KPIs und S-KPIs für jeden Cluster ausgelegt ist, und das Clustermodul (1010) zum Zuweisen nichtmeldender Benutzereinrichtungen zu den Clustern ausgelegt ist, wobei das Sammelmodul (1006) zum Sammeln von R-KPIs nach dem Bestimmen der Beziehung zwischen den R-KPIs und S-KPIs ausgelegt ist, und der Überwachungsserver (6) zum Schätzen von S-KPI-Werten basierend auf der generischen Beziehung und den gesammelten R-KPIs nach dem Berechnen der generischen Beziehung ausgelegt ist.

10. Überwachungsserver (6) nach Anspruch 9, wobei der Überwachungsserver ferner einen Prozessor umfasst, wobei das Berechnungsmodul (1008) im Prozessor implementiert ist, und wobei das Berechnungsmodul (1008) so ausgelegt ist, dass es im Schritt des Bestimmens der Beziehung einen Teilsatz von S-KPIs auswählt (302), die von einer einzelnen Benutzereinrichtung gemeldet werden, und die Werte der S-KPIs, die von der einzelnen Benutzereinrichtung gemeldet werden, und die R-KPIs zeitlich korreliert (304); wobei das Berechnungsmodul (1008) so ausgelegt ist, dass es für jede von der einzelnen Benutzereinrichtung gemeldete S-KPI die Beziehung unter Verwendung von Verfahren für maschinelles Lernen und/oder Datenauswertung definiert.

11. Überwachungsserver (6) nach Anspruch 10, wobei der Prozessor so ausgelegt ist, dass er die Beziehung für jede Benutzereinrichtung bestimmt, die S-KPIs meldet.

12. Überwachungsserver (6) nach einem der Ansprüche 9 bis 11, wobei der Prozessor so ausgelegt ist, dass er die geschätzten S-KPI-Werte zu Systemdienstgüte, QoSS,-Klassen zuordnet, um die QoSS-Klassen mit der Wahrnehmung von Benutzern der in QoSS-Meldungen von Benutzern gemeldeten Dienstleistung zu korrelieren.

**13.** Überwachungsserver (6) nach Anspruch 12, wobei die QoSS-Klassen, die beim Zuordnen verwendet werden, auf der Basis von QoSS-Meldungen von Benutzern bestimmt werden, die von wenigstens einem Teil der Benutzer des Dienstes empfangen werden.

**14.** Überwachungsserver (6) nach einem der Ansprüche 9 bis 11, wobei das Clustermodul (1010) so ausgelegt ist, dass es eine Benutzereinrichtung aus der repräsentativen Stichprobe einem Cluster zuweist, wenn eine Funktion, welche die Beziehung zwischen R-KPIs und S-KPIs für diese Benutzereinrichtung definiert, innerhalb eines für diesen Cluster definierten Bereichs liegt.

**15.** Kommunikationsnetzwerk zum Überwachen von Leistung eines Dienstes, der über das Kommunikationsnetzwerk an Benutzereinrichtungen zugestellt wird, wobei das Kommunikationsnetzwerk eine Mehrzahl von Netzwerkknoten (7 - 10) und einen Überwachungsserver (6) umfasst, wobei der Überwachungsserver umfasst:

ein Sammelmodul (1006), das zum Sammeln von Ressourcendienst-Leistungskennzahlen, R-KPIs, von Netzwerkressourcen und Systemdienst-Leistungskennzahlen, S-KPIs, aus einer repräsentativen Stichprobe von meldenden Benutzereinrichtungen, die den Dienst verwenden, ausgelegt ist; ein Berechnungsmodul (1008), das zum Bestimmen einer Beziehung zwischen den gesammelten Werten von R-KPIs und S-KPIs für jede Benutzereinrichtung aus der repräsentativen Stichprobe ausgelegt ist; ein Clustermodul (1010), das zum Clustern der Benutzereinrichtungen aus der repräsentativen Stichprobe basierend auf den Beziehungen zwischen den gesammelten Werten von R-KPIs und S-KPIs ausgelegt ist, wobei das Berechnungsmodul (1008) zum Berechnen einer generischen Beziehung zwischen R-KPIs und S-KPIs für jeden Cluster ausgelegt ist, und das Clustermodul (1010) zum Zuweisen nichtmeldender Benutzereinrichtungen zu den Clustern ausgelegt ist, wobei das Sammelmodul (1006) zum Sammeln von R-KPIs nach dem Bestimmen der Beziehung zwischen den R-KPIs und S-KPIs ausgelegt ist, und der Überwachungsserver (6) zum Schätzen von S-KPI-Werten basierend auf der generischen Beziehung und den gesammelten R-KPIs nach dem Berechnen der generischen Beziehung ausgelegt ist.

**Revendications**

**1.** Procédé de surveillance de performance d'un service délivré à des dispositifs d'équipement d'utilisateur par l'intermédiaire d'un réseau de communication tel que cela est perçu par un utilisateur ; le procédé comprenant :

- la collecte d'indicateurs de performances clés de services de ressources, R-KPI, (202) à partir de ressources de réseau ;
- la collecte d'indicateurs de performances clés de services de système, S-KPI, (204) à partir d'un échantillon représentatif de dispositifs d'équipement d'utilisateur de rapport en utilisant le service ;
- la détermination (206), pour chaque dispositif d'équipement d'utilisateur à partir de l'échantillon représentatif, d'une relation entre les valeurs collectées de R-KPI et de S-KPI ;
- le regroupement (208) des dispositifs d'équipement d'utilisateur à partir de l'échantillon représentatif sur la base des relations entre les R-KPI et les S-KPI ;
- le calcul, pour chaque groupement, d'une relation générique entre des R-KPI et des S-KPI ;
- l'assignation (210) de dispositifs d'équipement d'utilisateur de non-rapport à des groupements ;
- la collecte (212) de R-KPI à partir de ressources de réseau ; et
- l'estimation (214) de valeurs de S-KPI sur la base de la relation générique et des R-KPI collectés après le calcul de la relation générique.

**2.** Procédé selon la revendication 1, comprenant la répétition (216) des étapes périodiquement ou déclenchée par un événement.

**3.** Procédé selon l'une quelconque des revendications précédentes, dans lequel l'étape de la détermination de la relation comprend :

- la sélection (302) d'un sous-ensemble de S-KPI rapportés par un dispositif d'équipement d'utilisateur unique ;
- la corrélation dans le temps (304) des valeurs de S-KPI rapportées par le dispositif d'équipement d'utilisateur unique et des R-KPI ;
- pour chaque S-KPI rapporté par le dispositif d'équipement d'utilisateur unique, la détermination (306) d'une fonction définissant la relation en utilisant des méthodes d'apprentissage de machine et/ou d'exploration de données.

4. Procédé selon la revendication 3, comprenant en outre la répétition (308) des étapes de la détermination de la relation pour chaque dispositif d'équipement d'utilisateur ayant rapporté des S-KPI.

5. Procédé selon l'une quelconque des revendications précédentes, comprenant la mise en concordance des valeurs estimées de S-KPI avec des catégories de qualité de service de système, QoSS, pour corréler les catégories de QoSS avec la perception par l'utilisateur de la performance de service rapportée dans la QoSS rapportée d'utilisateur.

6. Procédé selon la revendication 5, dans lequel les catégories de QoSS utilisées dans la mise en concordance sont déterminées sur la base de la QoSS rapportée d'utilisateur reçue en provenance d'au moins une partie des utilisateurs du service.

7. Procédé selon l'une quelconque des revendications 1 à 6, dans lequel, à l'étape du regroupement (208), un dispositif d'équipement d'utilisateur à partir de l'échantillon représentatif est assigné (210) à un groupement si une fonction définissant la relation entre des R-KPI et des S-KPI pour ce dispositif d'équipement d'utilisateur se trouve à l'intérieur d'une plage définie pour ce groupement.

8. Procédé selon l'une quelconque des revendications 1 à 7, dans lequel les dispositifs d'équipement d'utilisateur de non-rapport sont assignés à des groupements sur la base d'une proximité géographique, d'une proximité de topologie de réseau, d'une performance d'un dispositif d'équipement d'utilisateur, d'un codec utilisé ou de toute combinaison de ceux-ci.

9. Serveur de surveillance (6) destiné à être utilisé dans un réseau de communication pour la surveillance de performance d'un service délivré à des dispositifs d'équipement d'utilisateur par l'intermédiaire du réseau de communication, le serveur de surveillance (6) comprenant un module de collecte (1006) apte à effectuer la collecte d'indicateurs de performances clés de services de ressources, R-KPI, à partir de ressources de réseau et d'indicateurs de performances clés de services de système, S-KPI, à partir d'un échantillon représentatif de dispositifs d'équipement d'utilisateur de rapport en utilisant le service ; un module de calcul (1008) apte à effectuer la détermination, pour chaque dispositif d'équipement d'utilisateur à partir de l'échantillon représentatif, d'une relation entre les valeurs collectées de R-KPI et de S-KPI ; un module de regroupement (1010) apte à effectuer le regroupement des dispositifs d'équipement d'utilisateur à partir de l'échantillon représentatif sur la base des relations entre les R-KPI et les S-KPI, dans lequel le module de calcul (1008) est apte à effectuer le calcul, pour chaque groupement, d'une relation générique entre des R-KPI et des S-KPI et le module de regroupement (1010) est apte à effectuer l'assignation de dispositifs d'équipement d'utilisateur de non-rapport à des groupements, dans lequel le module de collecte (1006) est apte à effectuer la collecte de R-KPI après la détermination de la relation entre les R-KPI et les S-KPI, et le serveur de surveillance (6) est apte à effectuer l'estimation de valeurs de S-KPI sur la base de la relation générique et des R-KPI collectés après le calcul de la relation générique.

10. Serveur de surveillance (6) selon la revendication 9, le serveur de surveillance comprenant en outre un processeur, dans lequel le module de calcul (1008) est mis en ouvre dans le processeur et dans lequel, à l'étape de la détermination de la relation, le module de calcul (1008) est apte à effectuer la sélection (302) d'un sous-ensemble de S-KPI rapportés par un dispositif d'équipement d'utilisateur unique et la corrélation dans le temps (304) des valeurs de S-KPI rapportées par le dispositif d'équipement d'utilisateur unique et des R-KPI ; dans lequel, pour chaque S-KPI rapporté par le dispositif d'équipement d'utilisateur unique, le module de calcul (1008) est apte à effectuer la définition de la relation en utilisant des méthodes d'apprentissage de machine et/ou d'exploration de données.

11. Serveur de surveillance (6) selon la revendication 10, dans lequel le processeur est apte à effectuer la détermination de la relation pour chaque dispositif d'équipement d'utilisateur ayant rapporté des S-KPI.

12. Serveur de surveillance (6) selon l'une quelconque des revendications 9 à 11, dans lequel le processeur est apte à effectuer la mise en concordance des valeurs estimées de S-KPI avec des catégories de qualité de service de système, QoSS, pour corréler les catégories de QoSS avec la perception par l'utilisateur de la performance de service rapportée dans la QoSS rapportée d'utilisateur.

13. Serveur de surveillance (6) selon la revendication 12, dans lequel les catégories de QoSS utilisées dans la mise en concordance sont déterminées sur la base de la QoSS rapportée d'utilisateur reçue en provenance d'au moins une partie des utilisateurs du service.

**14.** Serveur de surveillance (6) selon l'une quelconque des revendications 9 à 11, dans lequel le module de regroupement (1010) est apte à effectuer l'assignation d'un dispositif d'équipement d'utilisateur à partir de l'échantillon représentatif à un groupement si une fonction définissant la relation entre des R-KPI et des S-KPI pour ce dispositif d'équipement d'utilisateur se trouve à l'intérieur d'une plage définie pour ce groupement.

**15.** Réseau de communication destiné à la surveillance de performance d'un service délivré à des dispositifs d'équipement d'utilisateur par l'intermédiaire du réseau de communication, le réseau de communication comprenant une pluralité de noeuds de réseau (7-10) et un serveur de surveillance (6) ; le serveur de surveillance comprenant un module de collecte (1006) apte à effectuer la collecte d'indicateurs de performances clés de services de ressources, R-KPI, à partir de ressources de réseau et d'indicateurs de performances clés de services de système, S-KPI, à partir d'un échantillon représentatif de dispositifs d'équipement d'utilisateur de rapport en utilisant le service ; un module de calcul (1008) apte à effectuer la détermination, pour chaque dispositif d'équipement d'utilisateur à partir de l'échantillon représentatif, d'une relation entre les valeurs collectées de R-KPI et de S-KPI ; un module de regroupement (1010) apte à effectuer le regroupement des dispositifs d'équipement d'utilisateur à partir de l'échantillon représentatif sur la base des relations entre les R-KPI et les S-KPI, dans lequel le module de calcul (1008) est apte à effectuer le calcul, pour chaque groupement, d'une relation générique entre des R-KPI et des S-KPI et le module de regroupement (1010) est apte à effectuer l'assignation de dispositifs d'équipement d'utilisateur de non-rapport à des groupements, dans lequel le module de collecte (1006) est apte à effectuer la collecte de R-KPI après la détermination de la relation entre les R-KPI et les S-KPI, et le serveur de surveillance (6) est apte à effectuer l'estimation de valeurs de S-KPI sur la base de la relation générique et des R-KPI collectés après le calcul de la relation générique.

FIG. 1

FIG. 3

FIG. 2

Collecting S-KPIs and user
experience parameters (UR-QoSS)

502

Automatically identifying ranges
of S-KPIs corresponding to each
UR-QoSS class

504

Updating ranges of S-KPIs values
used to identify service
performance

506

FIG. 5

| UserID | Function f | Cluster ID |
|--------|-----------|-----------|
| A | $f_A$ | 1 |
| B | $f_B$ | 2 |
| C | $f_C$ | 1 |
| D | $f_D$ | 3 |
| E | $f_E$ | 2 |

FIG. 6

FIG. 7

| UserID | S-KPI$_1$ | S-KPI$_2$ | S-KPI$_3$ | S-KPI$_4$ | Age | Service usage frequency | occupation | UR-QoSS |
|---|---|---|---|---|---|---|---|---|
| A | 3 | 2 | 13 | 17 | 18 | High | Engineer | Bad |
| B | 7 | 4 | 3 | 9 | 43 | Low | Teacher | Perfect |
| C | 5 | 6 | 1 | 11 | 24 | High | Student | Medium |
| D | 11 | 15 | 8 | 4 | 31 | Medium | Researcher | Bad |
| E | 15 | 4 | 2 | 7 | 37 | Low | Engineer | Good |

FIG. 8

| time | R-KPI$_1$ | R-KPI$_2$ | R-KPI$_3$ | R-KPI$_4$ | R-KPI$_j$ | S-KPI$_i$(A) |
|---|---|---|---|---|---|---|

FIG. 4

FIG. 9

FIG. 10

to network elements                    1002

1012                    IF

                                       1004

                                       1006

Collecting module

                                       1008

Calculating module

                                       1010

Clustering module

Processor

                                       6

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008121062 A1

**Non-patent literature cited in the description**

- End user behavior and performance feedback for service analysis. **IGOR PAIS et al.** INTELLIGENCE IN NEXT GENERATION NETWORKS, 2009. ICIN 2009. 13TH INTERNATIONAL CONFERENCE ON. IEEE, 26 October 2009, 1-6